Europäisches Patentamt

**European Patent Office**

Office européen des brevets

(19)

(11) Numéro de publication: **0 133 136**
**A2**

(12) ## DEMANDE DE BREVET EUROPEEN

(21) Numéro de dépôt: **84401589.1**

(22) Date de dépôt: **27.07.84**

(51) Int. Cl.⁴: **H 01 G 4/38**
**C 04 B 37/00**

(30) Priorité: **29.07.83 FR 8312574**

(43) Date de publication de la demande:
**13.02.85 Bulletin 85/7**

(84) Etats contractants désignés:
**DE FR GB IT**

(71) Demandeur: **EUROFARAD EFD**
**93 rue Oberkampf**
**F-75011 Paris(FR)**

(72) Inventeur: **Le Gal, Pascal**
**4, rue de Paris**
**F-77450 Magny Le Hongre(FR)**

(74) Mandataire: **Corre, Jacques Denis Paul et al,**
**Cabinet Regimbeau 26, Avenue Kléber**
**F-75116 Paris(FR)**

(54) **Procédé de fabrication d'un composant électronique par association de cellules élémentaires, notamment de condensateurs céramiques multicouches.**

(57) L'invention s'applique à la fabrication d'un composant électronique (100) formé d'une pluralité de cellules élémentaires (10) dont chacune est réalisée, individuellement, sous forme d'un pavé de céramique frittée pourvu de métallisations latérales (11, 12).

Selon l'invention, la solidarisation mécanique et la liaison électrique entre les différentes cellules est réalisée par dépôt, entre chaque paire de surfaces métallisées en vis-à-vis, d'une quantité d'agent de métallisation de même nature que celui employé pour la réalisation des surfaces métallisées des cellules individuelles. Cet agent de métallisation est ensuite soumis à une cuisson, de manière à en réaliser le frittage.

Application notamment à la fabrication de barrettes de condensateurs en série utilisées dans les multiplicateurs de tension des alimentations trés haute tension pour tubes cathodiques.

FIG.5

EP 0 133 136 A2

PROCEDE DE FABRICATION D'UN COMPOSANT ELECTRONIQUE PAR ASSOCIATION DE CELLULES ELEMENTAIRES, NOTAMMENT DE CONDENSATEURS CERAMIQUES MULTICOUCHES.

La présente invention concerne un procédé de fabrication d'un composant électronique par association de cellules élémentaires, ainsi que des composants obtenus par ce procédé.

Elle sera décrite plus particulièrement dans le cas où les cellules sont des dipôles, plus précisément des condensateurs associés en série. Les barrettes de condensateurs ainsi obtenues, dont les points communs des différents condensateurs sont accessibles, sont notamment utilisés pour la réalisation des multiplicateurs de tension, dans lesquels deux barrettes identiques sont reliées entre elles par un réseau de diodes.

Ces multiplicateurs sont en particulier utilisés dans les alimentations à très haute tension des téléviseurs et des consoles de visualisation. La miniaturisation croissante de ces appareils oblige à réaliser des alimentations de plus en plus compactes, sans pour autant limiter les performances de tenue en très haute tension.

On verra cependant que l'invention s'applique à d'autres associations de condensateurs (par exemple des barrettes de condensateurs en parallèle), et même à l'association d'autres types de dipôles (par exemple des dipôles inductifs) ou même de multipôles (cellules de filtrage que l'on souhaite associer en cascade, par exemple).

Le point commun est que les différentes cellules sont réalisées sous forme de "chips", c'est-à-dire de pavés de céramique frittée pourvus latéralement de points d'émergence des conducteurs internes formant les pôles de la cellule , un agent de métallisation étant ensuite appliqué localement sur les faces de chaque pavé en contact électrique avec chaque point d'émergence, de manière à former autour de chacun de ces points d'émergence une surface métallisée permettant la prise de connexion ultérieure aux pôles de la cellule.

On sait réaliser de cette manière des condensateurs multicouches en forme de pavés présentant deux faces opposées métallisées. On sait également réaliser des inductances ou encore des cellules de filtrage intégrées dans le pavé de céramique.

Jusqu'à présent, les associations de cellules élémentaires étaient réalisées soit sous forme d'un composant unique monolithique, soit par association de composants discrets.

Le composant monolithique (c'est-à-dire formé d'un unique empilement de couches de céramique, dont chaque feuille porte les motifs correspondant à l'ensemble des cellules) offre une compacité maximale, mais présente cependant l'inconvénient majeur de ne pas permettre une sélection préalable des cellules élémentaires en fonction de leurs caractéristiques électriques (par exemple, pour des condensateurs, la valeur de la capacité, la résistance d'isolement, la tangente de l'angle de pertes ou encore la tension de claquage). Il suffit qu'une seule des cellules élémentaires présente un défaut irrémédiable pour rendre inutilisable l'ensemble du composant.

En outre, la taille du composant, et donc la gamme de valeur des éléments qui le constituent, est limitée par les problèmes mécaniques et de réalisation (planéité, contraintes thermiques, ...) qui sont inhérents à un composant céramique monolithique de grande dimension.

C'est pourquoi on préfère généralement utiliser une association de cellules élémentaires sous forme de composants discrets, que ces composants discrets soient montés directement sur le circuit à équiper par soudage de chacun des fils de connexion de chacun des composants, ou encore en rapportant sur une plaquette (par exemple par soudage à la vague des pavés individuels) les composants discrets, en rapportant ensuite des fils de connexion aux différents points de la plaquette correspordant aux bornes du composant final, et enfin en soudant ces fils de connexion au circuit à équiper. Cette dernière solution, outre les problèmes de lavage de la plaquette que l'on peut rencontrer lorsque l'on cherche à réaliser des composants haute tension, pose aussi bien des problèmes de coût de réalisation que de dimension finale du composant.

L'invention a pour but de remédier à ces différents inconvénients, en proposant un composant qui soit à la fois compact, simple à réaliser, et qui permette un choix des éléments préalablement à leur association.

Pour cela, le procédé propose de :
- rapprocher les pavés de manière à présenter en vis-à-vis les surfaces métallisées correspondant aux pôles des cellules à apparier pour réaliser le composant,
- déposer, entre chaque paire de surfaces métallisées en vis-à-vis, une quantité d'agent de métallisation, qui soit de même nature que celui employé pour la métallisation des cellules individuelles,
- procéder à une cuisson du composant, de manière à réaliser le frittage de cet agent de métallisation.

Cette cuisson est effectuée à une température de l'ordre de 850°C, dans le cas d'utilisation d'alliage convenable d'Argent-Palladium.

De cette sorte, l'agent de métallisation, une fois fritté, assure à la fois la solidarisation mécanique des cellules et la liaison électrique entre leurs pôles homologues.

Bien qu'il soit possible de réaliser un composant sans fils de connexion (pour soudage direct sur un substrat), il est également possible de rapporter des fils de connexion à chaque point de liaison formant un pôle du composant, ces connexions rapportées étant par exemple fixées par soudage aux surfaces métallisées restées apparentes du composant.

Eventuellement, le composant est ensuite enrobé, de manière à ne laisser émerger que les fils de connexion. Cet enrobage est par exemple réalisé dans une résine thermodurcissable ou autre, ou encore à l'intérieur d'un boîtier métallique.

Avantageusement, avant rapprochement des cellules, on procède à une mesure des caractéristiques individuelles de chacune des cellules réalisées et à une sélection, en fonction de ces caractéristiques mesurées, des cellules à associer pour réaliser le composant.

On peut ainsi non seulement éliminer les cellules qui ne répondent pas aux spécifications minimales exigées (par exemple tension de claquage, pour des condensateurs), mais encore associer ensemble des cellules ne présentant pas une trop grande dispersion de caractéristiques, ce qui est particulièrement souhaitable dans le cas des condensateurs identiques associés en série.

Il est également possible, en fonction des applications envisagées, de choisir pour une même barrette des cellules ayant des valeurs non identiques. En tout état de cause, la réalisation du composant final sera toujours obtenue par choix de cellules élémentaires d'un type disponible, sans qu'il soit besoin de mettre en oeuvre une fabrication spéciale spécifique à l'application envisagée.

D'autres caractéristiques et applications de l'invention apparaîtront à la lecture de la description détaillée ci-dessous, faite en référence aux dessins annexés, sur lesquels :

- les figures 1 et 2 montrent deux exemples de cellules
élémentaires (respectivement un dipôle et un quadripôle), utilisables dans l'invention ;
- la figure 3 montre un ensemble de cellules selon la

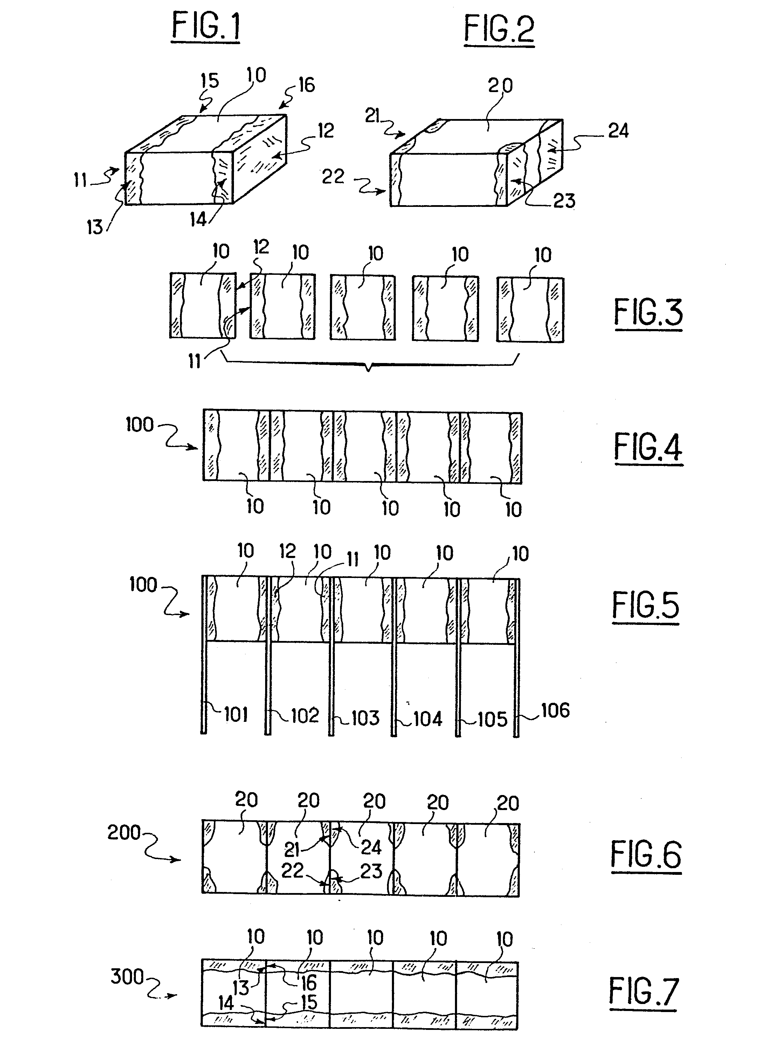

figure 1, avant rapprochement ;
- la figure 4 représente le composant obtenu après
réalisation de la liaison mécanique et électrique
des différentes cellules ;
- la figure 5 représente le même composant, après report
des fils de connexion ;
- la figure 6 est homologue de la figure 4, pour une
association de quadripôles selon la figure 2 ;
- la figure 7 est homologue de la figure 4, mais avec
les cellules élémentaires disposées d'une autre
manière ;

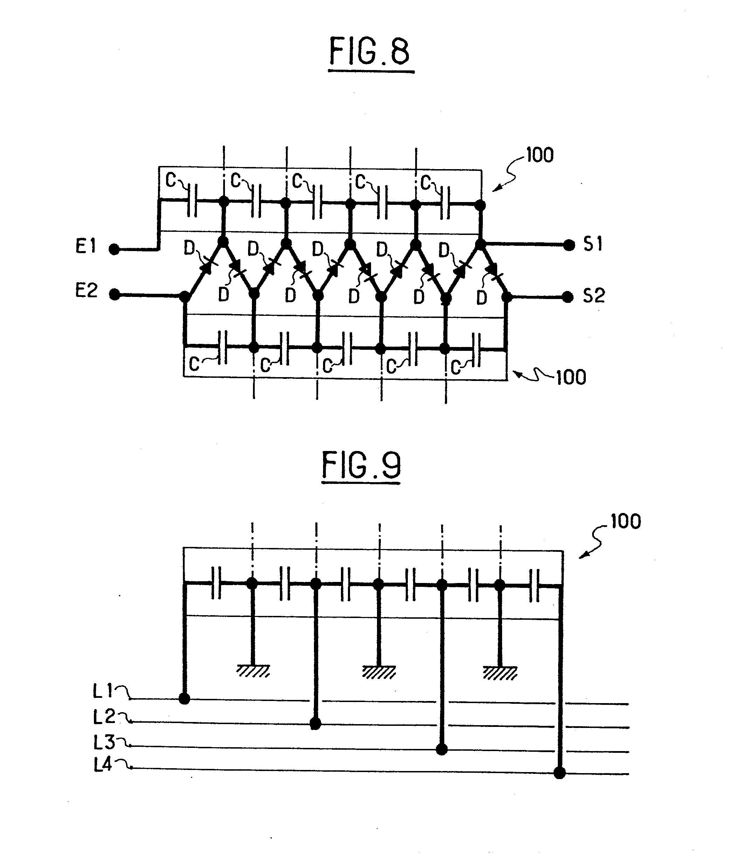

- la figure 8 montre un exemple schématique de multiplicateur de tension réalisé avec les composants de
l'invention ;
- la figure 9 montre un composant de l'invention utilisé
comme barrette de découplage d'une ligne omnibus.

La figure 1 montre un élément utilisable
comme cellule élémentaire selon l'invention, par
exemple un condensateur. Cette cellule 10 est ainsi
formée d'un empilement fritté de couches de céramique,
de forme sensiblement parallélépipédique, pourvues de
surfaces latérales 11, 12 métallisées reliant ensemble
toutes les électrodes identiques formant le condensateur.

Ces surfaces métallisées sont réalisées, de
façon classique, par application d'un agent de métallisation à base d'argent pur, ou d'un alliage argent-
palladium en proportion variable (de préférence une
partie de palladium pour trois parties d'argent), avec
3 à 5 % d'un verre qui peut être un borosilicate de
plomb (ou autre, en fonction de la céramique constituant
le pavé) permettant d'assurer la filiation de structure par diffusion du verre à l'intérieur de la céramique constituant le pavé.

La figure 2 présente un quadripôle réalisé suivant le même type (cellule capacitive ou non) ; le pavé 20 est pourvu alors de quatre surfaces métallisées 21, 22, 23, 24 permettant la prise de connexion aux différents pôles de la cellule.

Si l'on souhaite par exemple réaliser une barrette de condensateursen série, on choisira une pluralité de condensateurs identiques ayant une structure comparable à celle de la figure 1 ; ces cellules seront ensuite juxtaposées comme indiqué figure 3, avec leurs faces 11 et 12 correspondantes disposées en vis-à-vis.

On notera que, à ce stade, il est possible de sélectionner les cellules à associer entre elles, en fonction de leur capacité (par exemple choisie à $\pm$ 10 %), de la résistance d'isolement ($\pm$ 10 %), de leurs tensions de claquage (de valeur minimale exigée) et éventuellement de la tangente de leur angle de perte.

Les cellules ainsi choisies sont rapprochées (figure 4), avec application d'une goutte d'agent de métallisation entre chacune des surfaces métallisées en vis-à-vis.

De manière à assurer l'homogénéité de la liaison électrique et la solidité de la liaison mécanique réalisée par ce moyen, l'agent de métallisation est choisi ayant la même composition que celui ayant servi à la réalisation des surfaces métallisées.

Le composant 100 ainsi obtenu est ensuite soumis à une cuisson ayant pour objet de réaliser le frittage de l'agent de métallisation. Pour la composition indiquée plus haut, cette cuisson peut par exemple être effectuée à un palier de 850° pendant environ 10 mn, le temps total de passage au four étant de l'ordre de 1 heure.

Eventuellement, il est possible de rapporter des fils de connexion 101 à 106 (figure 5), par exemple par simple soudage au fer des fils sur les zones restées apparentes des surfaces métallisées.

Par la mise en oeuvre de ce procédé, il a été ainsi réalisé une barrette de 6 condensateurs de 2 200 pF supportant chacun une tension de 5 kV, le composant final ayant une dimension de l'ordre de 50 x 8 x 4 mm.

Ce procédé se prête particulièrement à la réalisation de composants formés de cellules élémentaires susceptibles de supporter chacune de 1 à 5 kV, et même jusqu'à 10 kV.

La figure 6 montre un autre exemple de composant 200 formé d'une association de quadripôles 20, chaque cellule élémentaire étant formée d'un élément décrit figure 2. On voit que, dans ce cas, à chaque interface entre deux cellules, il n'y a non plus 1, mais 2 liaisons électriques et mécaniques, entre les faces respectives 21 et 24, d'une part, et 22 et 23, d'autre part, de deux composants adjacents.

Il est ainsi possible d'associer deux quadripôles, par exemple des cellules de filtrage en cascade, des filtres L-C où les inductantes et les capacités peuvent être discrètes ou réparties, ou encore des structures capacitives plus complexes.

La figure 7 montre un exemple de composant 300 où l'on a associé des condensateurs élémentaires non plus en série, mais en parallèle : les cellules 10 décrites figure 1 sont ainsi posées avec leurs faces métallisées non plus en vis-à-vis, mais en alignement, de sorte que ce sont les parties débordantes 13, 14, d'une part, et 15, 16, d'autre part, des métallisations qui sont en contact, et non plus les deux faces métallisées 11, 12, proprement dites du parallélépipède.

La figure 8 montre un exemple d'application à la réalisation d'un multiplicateur de tension, dans lequel on utilise deux barrettes 100 de condensateurs C en série, chacune des barrettes étant réalisées suivant les enseignements de l'invention.

Les points milieu des condensateurs de chaque barrette sont associés au moyen d'un réseau de diodes D, selon un schéma classique comportant généralement trois à sept étages (5 étages dans l'exemple représenté). Le multiplicateur de tension ainsi obtenu comporte ainsi deux entrées $E_1$, $E_2$ recevant la basse tension alternative et deux sorties $S_1$, $S_2$ délivrant la très haute tension redressée.

Le câblage du réseau de diodes et des deux barrettes de condensateur peut être ou bien réalisé sur un circuit imprimé (par exemple un support époxy) ou bien directement "en l'air", l'ensemble étant ensuite enrobé pour ne laisser apparaître que les deux entrées et les deux sorties.

La figure 9 montre une autre application de la barrette de condensateurs en série 100, dans laquelle cette barrette est utilisée pour le découplage des lignes omnibus, par exemple en bout des cartes de circuit imprimé. Dans ce cas, un point sur deux de la barrette de condensateur est relié à la masse, les autres points étant reliés à chacun des conducteurs $L_1$, $L_2$, $L_3$, $L_4$ dont l'ensemble forme la ligne omnibus.

REVENDICATIONS

1) Un procédé de fabrication d'un composant électronique (100, 200, 300) par association d'une pluralité de cellules élémentaires (10, 20), dans lequel :
- chaque cellule élémentaire est réalisée, individuellement, sous forme d'un pavé de céramique frittée pourvu latéralement de points d'émergence des conducteurs internes formant les pôles de la cellule,
- on applique localement sur les faces de chaque pavé un agent de métallisation en contact électrique avec chaque point d'émergence d'un conducteur interne, de manière à former autour de ces points une surface métallisée (11, 12 ; 21-24) permettant la prise de connexion ultérieure aux pôles de la cellule,
- on fritte l'agent de métallisation, de manière à provoquer le durcissement des surfaces métallisées, caractérisé en ce que, après avoir réalisé ainsi chaque cellule élémentaire,
- on rapproche les pavés de manière à présenter en vis-à-vis les surfaces métallisées correspondant aux pôles des cellules à apparier pour réaliser le composant,
- on dépose, entre chaque paire de surfaces métallisées en vis-à-vis, une quantité d'agent de métallisation, cet agent de métallisation étant de même nature que celui employé pour la métallisation des cellules individuelles,
- on procède à une cuisson du composant, de manière à réaliser le frittage de l'agent de métallisation, de sorte que l'agent de métallisation ainsi fritté assure à la fois la solidarisation mécanique des cellules et la liaison électrique entre leurs pôles homologues.

2) Un procédé selon la revendication 1, caractérisé en ce qu'il comporte en outre une étape finale de mise en place de fils (101-106) de connexion rapportés à chaque point de liaison formant un pôle du composant.

3) Un procédé selon la revendication 2, caractérisé en ce que les connexions rapportées sont fixées par soudage aux surfaces métallisées restées apparentes du composant.

4) Un procédé selon l'une des revendications 2 et 3, caractérisé en ce que le composant est ensuite enrobé, de manière à ne laisser émerger que les fils de connexion.

5) Un procédé selon la revendication 1, caractérisé en ce que, avant rapprochement des cellules, on procède aux étapes de :
- mesure des caractéristiques individuelles de chacune des cellules réalisées,
- sélection, en fonction des caractéristiques ainsi mesurées, des cellules à associer pour réaliser le composant.

6) Un composant électronique (100, 200, 300) formé d'une association de cellules élémentaires en forme de pavés de céramique frittée pourvus latéralement de surfaces métallisées permettant la prise de connexion aux pôles de la cellule, caractérisé en ce que les différentes cellules sont mécaniquement solidarisées et électriquement reliées par le procédé selon l'une des revendications 1 à 5.

7) Un composant (100, 300) selon la revendication 6, caractérisé en ce que chaque cellule est un condensateur céramique multicouches en forme de pavé présentant deux faces opposées métallisées, les différents pavés étant alignés avec leurs faces métallisées en vis-à-vis, de manière à réaliser une barrette (100) de condensateurs (C) en série, le point commun à deux
condensateurs adjacents étant électriquement accessible.

8) Un multiplicateur de tension, caractérisé
en ce qu'il comprend deux composants selon la revendication 7 formant barrettes (100) de condensateurs, ces
deux barrettes étant associées à un réseau de diodes
(D) reliant électriquement les armatures des condensateurs élémentaires (C) de chaque barrette.

0133136

## FIG.1

15 10 16

11

13 14 12

## FIG.2

20

21

22

24

23

## FIG.3

10 12 10 10 10 10

11

## FIG.4

100

10 10 10 10 10

## FIG.5

100

10 12 10 11 10 10 10

101 102 103 104 105 106

## FIG.6

200

20 20 20 20 20

21 24

22 23

## FIG.7

300

10 10 10 10 10

13 16

14 15

# FIG.8

# FIG.9